# FASCICULE DE BREVET EUROPEEN

(11) **EP 2 828 513 B1**
(45) Date de publication et mention de la délivrance du brevet: **14.03.2018**
(21) Numéro de dépôt: 13710474.1
(22) Date de dépôt: 18.02.2013
(51) Int. Cl.: F02K 1/04

(54) **CÔNE D'ÉJECTION DES GAZ POUR TURBORÉACTEURS D'AÉRONEFS**
AUSLASSKONUS FÜR EIN STRAHLTRIEBWERK EINES FLUGZEUGS
AIRCRAFT TURBOJET ENGINE EXHAUST CONE

(30) Priorité: 20.03.2012 FR 1252473
(43) Date de publication de la demande: 28.01.2015
(73) Titulaire: Safran Nacelles, 76700 Gonfreville-l'Orcher (FR)
(72) Inventeur: SOULIER, Pascal-Marie Paul Marcel, F-76600 Le Havre (FR); GUILLON, Jean-Bernard, F-76600 Le Havre (FR); GUEGOU, Jean-Pierre, F-76290 Mannevillette (FR)
(74) Mandataire: Gaillarde, Frédéric F. Ch.
(86) Numéro de dépôt international: PCT/FR2013/050326
(87) Numéro de publication internationale: WO 2013/140055

(56) Documents cités:
- EP-A1- 1 744 045
- EP-A1- 1 878 894
- US-A- 4 238 092
- US-B1- 6 260 352

## Description

La présente demande de brevet se rapporte aux cônes d'éjection des gaz pour turboréacteurs d'aéronefs.

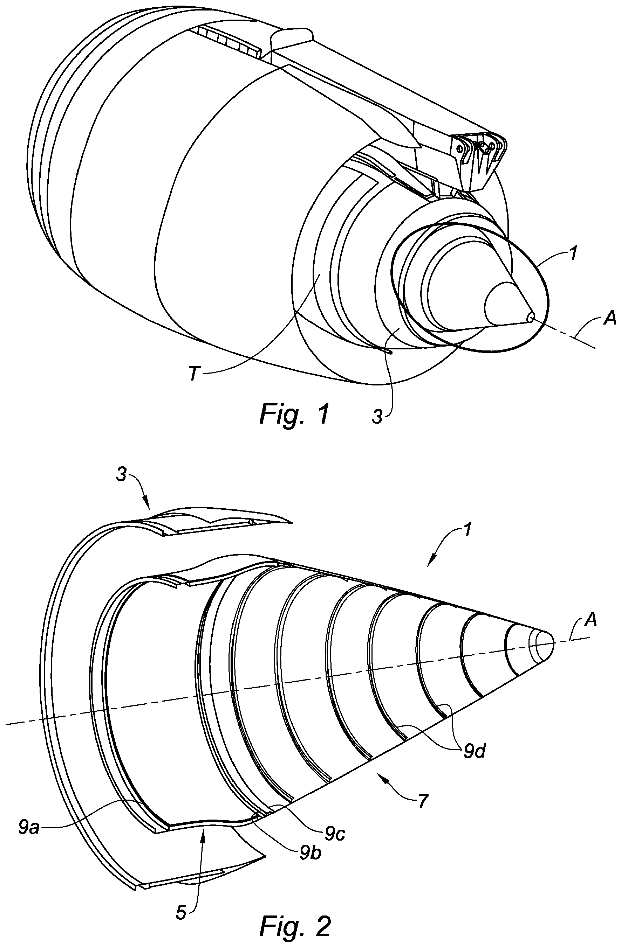

Comme cela est connu en soi, et représenté à la figure 1 ci-jointe, il convient en général de prévoir un cône d'éjection 1 à l'arrière d'un turboréacteur T d'aéronef, afin d'une part d'optimiser l'écoulement des gaz chauds expulsés par le turboréacteur, et d'autre part d'absorber au moins une partie du bruit engendré par l'interaction de ces gaz chauds avec l'air ambiant et avec le flux d'air froid expulsé par la soufflante du turboréacteur. Des cônes d'éjection de l'art antérieur sont divulgués dans les documents US4238092, EP1878894, EP1744045 et US6260352.

Un tel cône d'éjection classique 1 est représenté à la figure 2 ci-annexée, sur laquelle l'amont et l'aval (par rapport au sens d'écoulement des gaz d'échappement du turboréacteur) sont situés respectivement à gauche et à droite de la figure).

Ce cône est destiné à être positionné en aval de la turbine du turboréacteur T, de manière concentrique à une virole, ou buse 3, elle-même fixée sur le bord aval de la chambre de combustion du turboréacteur T.

Plus précisément, le cône d'éjection 1 comprend, à proprement parler, une partie avant de cône 5 (souvent désignée par les termes anglo-saxons « front plug »), de forme sensiblement cylindrique, et une partie arrière de cône 7 (souvent désignée par les termes anglo-saxons « rear plug »), de forme conique.

Ces deux parties du cône d'éjection peuvent typiquement être formées par des tôles en alliage métallique de type Inconel 625 ou titane B21s, raidies par des raidisseurs concentriques 9a, 9b, 9c, 9d.

La partie avant 5 peut présenter une fonction d'absorption acoustique, auquel cas la tôle extérieure formant cette partie est perforée, des structures en sandwich du type nid d'abeille étant placées à l'intérieur de ces tôles en regard de leurs perforations.

Par ailleurs, les parties avant 5 et arrière 7 peuvent être formées en deux éléments démontables, comme cela est visible à la figure 2, ces deux éléments étant alors fixés l'un sur l'autre au moyen de brides 9b, 9c (remplissant aussi la fonction de raidisseurs) reliées l'une à l'autre par exemple par vissage.

En variante, ces parties avant 5 et arrière 7 peuvent être reliées l'une à l'autre de manière indémontable, soit parce qu'elles forment un ensemble monobloc, soit parce qu'elles sont fixées l'une à l'autre par exemple par soudage.

Dans certains cas, il est nécessaire de prévoir un tube de drainage et/ou de ventilation 11 d'huile et/ou d'air huilé en provenance du turboréacteur, ce tube débouchant à la pointe de la partie arrière de cône 7 (voir figure 1).

Ce tube est classiquement fixé au turboréacteur T et maintenu au moyen d'un palier disposé à l'intérieur de la partie arrière de cône 7 ; compte-tenu des fortes vibrations engendrées par le turboréacteur, des frottements importants interviennent entre le tube et le palier, engendrant des usures de ces pièces.

Pour cette raison au moins, il convient de pouvoir inspecter régulièrement ces pièces.

Classiquement, cette inspection nécessite le démontage de la partie arrière de cône 7 par rapport à la partie avant de cône 5 lorsque le cône d'éjection 1 est en deux parties démontables, ou bien alors le démontage complet du cône 1 lorsque les parties avant 5 et arrière 7 sont reliées l'une à l'autre de manière indémontable.

Ces opérations de démontage sont longues à mettre en oeuvre, et nécessitent l'intervention de plusieurs opérateurs, eu égard notamment au poids relativement important des pièces à manipuler.

La présente invention a ainsi notamment pour objectif de fournir un cône d'éjection des gaz pour les turboréacteurs munis d'un tube de ventilation et/ou de drainage, qui permette de réaliser facilement, avec le minimum d'opérateurs, l'inspection notamment de la zone de coopération de ce tube avec son palier de support.

On atteint notamment ce but de l'invention avec un cône d'éjection des gaz, comprenant :
- une partie avant de cône, de forme sensiblement cylindrique,
- une partie arrière de cône, de forme sensiblement conique,
- un tube de drainage et/ou de ventilation s'étendant à l'intérieur de ces parties avant et arrière de cône, et débouchant à l'extrémité de la partie arrière de cône,
- un palier de support de ce tube de drainage et/ou de ventilation, disposé à l'intérieur de ladite partie arrière de cône,

ce cône d'éjection des gaz étant remarquable en ce que ladite partie arrière de cône comprend elle-même une sous-partie avant reliée à ladite partie avant de cône, et une sous-partie arrière fixée de manière démontable sur ladite sous-partie avant, munie d'un orifice de sortie dudit tube de drainage et/ou de ventilation.

Grâce à ces caractéristiques, il suffit de démonter la sous-partie arrière de la sous-partie avant pour pouvoir inspecter la zone de coopération du tube de drainage et/ou de ventilation avec son pallier de support, et plus généralement, pour pouvoir inspecter tout l'intérieur du cône d'éjection des gaz.

Si nécessaire, un endoscope pourra être utilisé à cette fin.

La présente invention permet donc d'éviter d'avoir à démonter toute la partie arrière du cône d'éjection des gaz, voire tout le cône d'éjection des gaz lorsque ses parties avant et arrière sont reliées l'une à l'autre de manière indémontable : on peut donc réaliser les opérations d'inspection de l'intérieur de ce cône, et notamment de la zone de coopération du tube de drainage et/ou de ventilation avec son pallier de support, avec le minimum d'opérateurs.

Suivant d'autres caractéristiques optionnelles de la présente invention :
- ledit pallier est fixé à l'intérieur de ladite sous-partie avant ;
- ledit pallier est fixé à l'intérieur de ladite sous-partie arrière ;
- ledit pallier est maintenu en place par les bords desdites sous-partie avant et arrière ;
- ledit pallier présente une forme sensiblement annulaire ;
- la longueur axiale de ladite sous-partie arrière est limité au besoin fonctionnel pour l'installation et l'inspection dudit tube de drainage et/ou de ventilation ;
- le plus grand diamètre de ladite sous-partie arrière est compris entre 10 et 20 % du plus grand diamètre de ladite sous-partie avant ;
- le plus grand diamètre de ladite sous-partie avant est compris entre 80 et 95 % du plus grand diamètre de ladite partie avant de cône ;
- ladite partie avant de cône et ladite sous-partie avant sont reliées l'une à l'autre de manière indémontable ;
- ladite partie avant de cône et ladite sous-partie avant sont reliées l'une à l'autre de manière démontable.

La présente invention se rapporte également à une nacelle équipée d'un tel cône d'éjection des gaz.

D'autres caractéristiques et avantages de la présente invention apparaîtront à la lecture de la description qui va suivre, et à l'examen des figures ci-annexées, dans lesquelles :
- la figure 1 est une vue d'ensemble en perspective d'un turboréacteur d'aéronef entouré de sa nacelle munie d'un cône d'éjection des gaz, tel que décrit dans le préambule de la présente description,
- la figure 2 est une vue en perspective et en coupe d'un cône d'éjection des gaz typique de l'état de la technique, tel que décrit dans le préambule de la présente description,
- la figure 3 est une vue en perspective d'un cône d'éjection des gaz selon l'invention,
- la figure 4 est une vue en coupe axiale du cône d'éjection de la figure 3, et
- la figure 5 est une vue en perspective éclatée de détail de l'extrémité arrière du cône d'éjection des figures 3 et 4.

Sur l'ensemble de ces figures, des références identiques ou analogues désignent des organes ou ensemble d'organes identiques ou analogues.

On utilisera dans la description qui suit les termes « avant » et « arrière ».

Ces termes doivent s'entendre par rapport au sens de circulation de l'air dans la nacelle lorsque le turboréacteur est en fonctionnement.

Plus précisément, ces parties avant et arrière sont respectivement situées sur la gauche et sur la droite de chacune des figures ci-annexées.

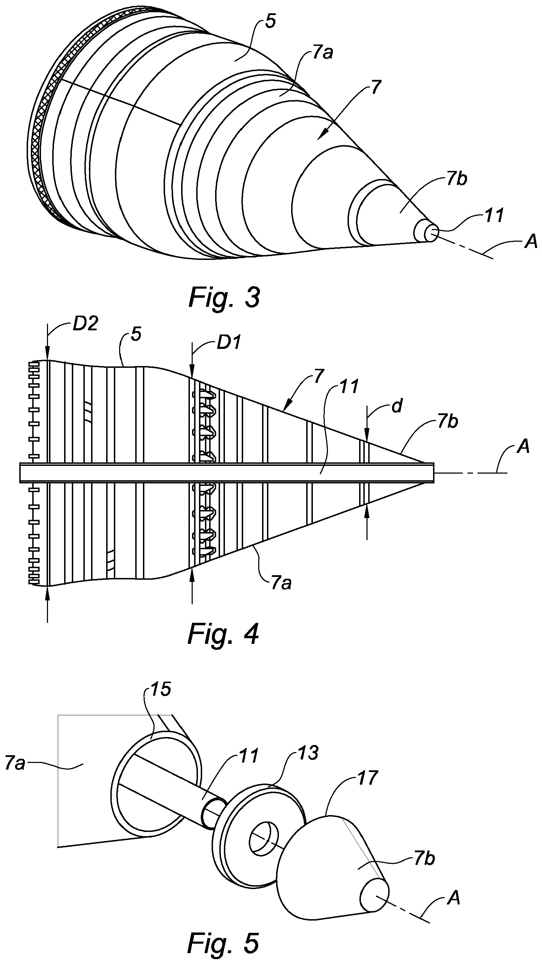

On a représenté sur les figures 3 et 4 un cône d'éjection 1 selon l'invention, comprenant deux parties principales, à savoir une partie avant de cône 5 de forme sensiblement cylindrique, et une partie arrière de cône 7 de forme sensiblement conique.

Comme indiqué dans le préambule de la présente description, ces parties avant 5 et arrière 7 de cône peuvent être reliées l'une à l'autre de manière indémontable, par exemple par soudage, ou bien de manière démontable, par exemple par vissage, comme c'est le cas dans le mode de réalisation qui a été représenté aux figures 3 et 4.

La partie arrière du cône 7 comprend elle-même une sous-partie avant 7a et une sous-partie arrière 7b, celle-ci étant reliée de manière démontable, par exemple par vissage, sur celle-là.

La sous-partie arrière 7b comporte un orifice à son extrémité, permettant la sortie d'un tube de drainage et/ou de ventilation 11 relié au turboréacteur T.

On comprend donc que les sous-parties avant 7a et arrière 7b forment chacune en réalité un cône tronqué de même axe et de même angle au sommet.

Comme cela est visible aux figures 4 et 5, le tube de drainage et/ou de ventilation 11 est maintenu centré à l'intérieur du cône d'éjection des gaz 1 par un palier 13 situé à l'interface entre la sous-partie avant 7a et la sous-partie arrière 7b de la partie arrière de cône 7.

Ce palier 13, qui présente une forme sensiblement annulaire permettant sa traversée par le tube de drainage et/ou de ventilation 11, peut être fixé sur le bord 15 de la sous-partie avant 7a, ou sur le bord 17 de la sous-partie arrière 7b, ou bien être simplement pincé entre ces deux bords lorsque la sous-partie arrière 7b est fixée sur la sous-partie avant 7a.

La longueur de ladite sous-partie arrière est limitée au besoin fonctionnel pour l'installation et l'inspection.

De préférence, et comme cela est visible à la figure 4, le plus grand diamètre d de la sous-partie arrière 7b est typiquement compris ente 10 et 20% du plus grand diamètre D1 de la sous-partie avant 7a.

Ce plus grand diamètre D1 est quant à lui typiquement compris entre 80 et 95 % du plus grand diamètre D2 de la partie avant de cône 5.

Comme on peut le comprendre à la lumière de la description qui précède, lorsqu'on souhaite inspecter la zone de coopération du tube de drainage et/ou de ventilation 11 avec son palier de support 13, il suffit de démonter la sous-partie arrière 7b de la sous-partie avant 7a.

Les faibles dimensions de cette sous-partie arrière 7b permettent son démontage rapide et sa manipulation par un seul opérateur.

Une fois que cette sous-partie 7b a été démontée, l'opérateur peut inspecter non seulement ladite zone de coopération, mais également l'intérieur de l'ensemble du cône d'éjection 1, si nécessaire avec un endoscope.

Bien entendu, la présente invention n'est nullement limitée aux modes de réalisation décrits et représentés, fournis à titre de simples exemples.

## Revendications

1. Cône d'éjection des gaz (1), comprenant :
- une partie avant de cône (5), de forme sensiblement cylindrique,
- une partie arrière de cône (7), de forme sensiblement conique,
- un tube de drainage et/ou de ventilation (11) s'étendant à l'intérieur de ces parties avant (5) et arrière (7) de cône, et débouchant à l'extrémité de la partie arrière de cône,
- un palier de support (13) de ce tube de drainage et/ou de ventilation, disposé à l'intérieur de ladite partie arrière de cône (7),
ce cône d'éjection des gaz (1) étant **caractérisé en ce que** ladite partie arrière de cône (7) comprend elle-même une sous-partie avant (7a) reliée à ladite partie avant de cône (5), et une sous-partie arrière (7b) fixée de manière démontable sur ladite sous-partie avant (7a), munie d'un orifice de sortie dudit tube de drainage et/ou de ventilation (11).

2. Cône d'éjection des gaz (1) selon la revendication 1, dans lequel ledit pallier (13) est fixé à l'intérieur de ladite sous-partie avant (7a).

3. Cône d'éjection des gaz (1) selon la revendication 1, dans lequel ledit pallier (13) est fixé à l'intérieur de ladite sous-partie arrière (7b).

4. Cône d'éjection des gaz selon la revendication 1, dans lequel ledit pallier (13) est maintenu en place par les bords desdites sous-partie avant (7a) et arrière (7b).

5. Cône d'éjection des gaz (1) selon l'une quelconque des revendications précédentes, dans lequel ledit pallier (13) présente une forme sensiblement annulaire.

6. Cône d'éjection des gaz (1) selon l'une quelconque des revendications précédentes, dans lequel la longueur de ladite sous-partie arrière est limitée au besoin fonctionnel pour l'installation et l'inspection.

7. Cône d'éjection des gaz (1) selon l'une quelconque des revendications précédentes, dans lequel le plus grand diamètre de ladite sous-partie arrière (7b) est compris entre 10 et 20 % du plus grand diamètre de ladite sous-partie avant (7a).

8. Cône d'éjection des gaz (1) selon l'une quelconque des revendications précédentes, dans lequel le plus grand diamètre de ladite sous-partie avant (7a) est compris entre 80 et 95 % du plus grand diamètre de ladite partie avant de cône (5).

9. Cône d'éjection des gaz (1) selon l'une quelconque des revendications précédentes, dans lequel ladite partie avant de cône (5) et ladite sous-partie avant (7a) sont reliées l'une à l'autre de manière indémontable

10. Cône d'éjection des gaz (1) selon l'une quelconque des revendications 1 à 8, dans lequel ladite partie avant de cône (5) et ladite sous-partie avant (7a) sont reliées l'une à l'autre de manière démontable.

11. Nacelle équipée d'un cône d'éjection des gaz (1) conforme à l'une quelconque des revendications précédentes.

## Patentansprüche

1. Gasausstoßkegel (1), umfassend:
- einen vorderen Kegelteil (5) mit einer im Wesentlichen zylindrischen Form,
- einen hinteren Kegelteil (7) mit einer im Wesentlichen konischen Form,
- ein Ablauf- und/oder Belüftungsrohr (11), das sich im Inneren dieser vorderen (5) und hinteren (7) Kegelteile erstreckt und am Ende des hinteren Kegelteils mündet,
- ein Stützlager (13) dieses Ablauf- und/oder Belüftungsrohrs, das im Inneren des hinteren Kegelteils (7) angebracht ist,
wobei dieser Gasausstoßkegel (1) **dadurch gekennzeichnet ist, dass** der hintere Kegelteil (7) seinerseits einen vorderen Unterteil (7a) umfasst, der mit dem vorderen Kegelteil (5) verbunden ist, und einen hinteren Unterteil (7b), der auf abmontierbare Weise auf dem vorderen Unterteil (7a) fixiert ist, ausgestattet mit einer Ausgangsöffnung des Ablauf- und/oder Belüftungsrohrs (11).

2. Gasausstoßkegel (1) nach Anspruch 1, wobei das Lager (13) im Inneren des vorderen Unterteils (7a) fixiert ist.

3. Gasausstoßkegel (1) nach Anspruch 1, wobei das Lager (13) im Inneren des hinteren Unterteils (7b) fixiert ist.

4. Gasausstoßkegel nach Anspruch 1, wobei das Lager (13) durch die Ränder des vorderen (7a) und hinteren (7b) Unterteils in seiner Position gehalten wird.

5. Gasausstoßkegel (1) nach einem der vorhergehenden Ansprüche, wobei das Lager (13) eine im Wesentlichen runde Form aufweist.

6. Gasausstoßkegel (1) nach einem der vorhergehenden Ansprüche, wobei die Länge des hinteren Unterteils auf die funktionelle Anforderung für die Installation und die Inspektion beschränkt ist.

7. Gasausstoßkegel (1) nach einem der vorhergehenden Ansprüche, wobei der größte Durchmesser des hinteren Unterteils (7b) im Bereich zwischen 10 und 20 % des größten Durchmessers des vorderen Unterteils (7a) liegt.

8. Gasausstoßkegel (1) nach einem der vorhergehenden Ansprüche, wobei der größte Durchmesser des vorderen Unterteils (7a) im Bereich zwischen 80 und 95 % des größten Durchmessers des vorderen Kegelteils (5) liegt.

9. Gasausstoßkegel (1) nach einem der vorhergehenden Ansprüche, wobei der vordere Kegelteil (5) und der vordere Unterteil (7a) auf nicht abmontierbare Weise miteinander verbunden sind.

10. Gasausstoßkegel (1) nach einem der Ansprüche 1 bis 8, wobei der vordere Kegelteil (5) und der vordere Unterteil (7a) auf abmontierbare Weise miteinander verbunden sind.

11. Gondel, ausgestattet mit einem Gasausstoßkegel (1) gemäß einem der vorhergehenden Ansprüche.

## Claims

1. A gas ejection cone (1), comprising:
- a front cone portion (5), with a substantially cylindrical shape,
- a rear cone portion (7), with a substantially conical shape,
- a draining and/or ventilation tube (11) extending inside these front (5) and rear (7) cone portions, and opening at the end of the rear cone portion,
- a bearing (13) for supporting this draining and/or ventilation tube, disposed inside said rear cone portion (7),
this gas ejection cone (1) being **characterized in that** said rear cone portion (7), in turn, comprises a front sub-portion (7a) linked to said front cone portion (5), and a rear sub-portion (7b) linked in a detachable manner to said front sub-portion (7a), provided with an outlet orifice of said draining and/or ventilation tube (11).

2. The gas ejection cone (1) according to claim 1, wherein said bearing (13) is fastened inside said front sub-portion (7a).

3. The gas ejection cone (1) according to claim 1, wherein said bearing (13) is fastened inside said rear sub-portion (7b).

4. The gas ejection cone (1) according to claim 1, wherein said bearing (13) is held in place by the edges of said front (7a) and rear (7b) sub-portions.

5. The gas ejection cone (1) according to any one of the preceding claims, wherein said bearing (13) has a substantially annular shape.

6. The gas ejection cone (1) according to any one of the preceding claims, wherein the length of said rear sub-portion is limited to the functional need for installation and inspection.

7. The gas ejection cone (1) according to any one of the preceding claims, wherein the largest diameter of said rear sub-portion (7b) is comprised between 10 and 20% of the largest diameter of said front sub-portion (7a).

8. The gas ejection cone (1) according to any one of the preceding claims, wherein the largest diameter of said front sub-portion (7a) is comprised between 80 and 95% of the largest diameter of said front cone portion (5).

9. The gas ejection cone (1) according to any one of the preceding claims, wherein said front cone portion (5) and said front sub-portion (7a) are linked to each other in a non-detachable manner.

10. The gas ejection cone (1) according to any one of claims 1 to 8, wherein said front cone portion (5) and said front sub-portion (7a) are linked to each other in a detachable manner.

11. A nacelle equipped with a gas ejection cone (1) in accordance with any one of the preceding claims.
